# EUROPEAN PATENT APPLICATION

(11) **EP 2 386 787 A2**
(43) Date of publication of application: **16.11.2011**
(21) Application number: 11401521.7
(22) Date of filing: 09.11.2010
(51) Int. Cl.: F16L 25/00

(54) **Corrugated pipe compensator**

(30) Priority: 10.11.2009 DE 202009015214 U
(62) Divisional of application: 10401186.1
(71) Applicant: LTL Leitungstechnische Lösungen GmbH, 61276 Weilrod (DE)
(72) Inventor: Zimmermann, Klaus, 61276 Weilrod (DE)
(74) Representative: Thomas, Matthias

(57) **Abstract**

Die Erfindung betrifft einen Wellrohrkompensator mit einem gestauchten Wellrohr- oder Wellschlauchabschnitt (1,20,43) und Befestigungsmitteln, die an den Wellrohr- oder Wellschlauchenden angeordnet sind, wobei die Befestigungsmittel mit an den Wellrohr- oder Wellschlauchenden angeformten Flanschen (4,5,24) oder mit einem in ein Wellental eingelegten Ring (22) oder durch eine Drahtverstiftung (41) in axialer Richtung gehalten werden img id="iaf01" file="imgaf001.tif" wi="172" he="92" img-content="drawing" img-format="tif"/>

## Description

Die Erfindung betrifft Wellrohrkompensatoren, die unter Verwendung von Wellrohren oder Wellschläuchen hergestellt sind.

Es ist bekannt, dass bei Installationen von Solarkollektoren sowie bei Heizungs- oder Kühlanlagen in den installierten Leitungssystemen Spannungszustände entstehen, die zweckmäßigerweise durch Kompensatoren abgebaut werden sollten. lnsbesondere ist dies notwendig beim Einsatz von Solarkollektoren, da bei diesen besonders große Temperaturschwankungen entstehen und damit einhergehend erhebliche Spannungen im Leitungssystem auftreten können.

Bekannt ist ebenso, dass bei Installationen von Solarkollektoren und den dazu gehörenden Leitungssträngen Versatz der Leitungsenden auftreten kann und durch elastische Zwischenstücke, wie eben durch Wellrohrkompensatoren, ausgeglichen werden muss.

Es ist naheliegend, für solche Aufgaben die so genannten Faltenbälge einzusetzen. Diese müssen allerdings zunächst mit geeigneten Anschlussverbindungen ausgestattet werden. Das heißt, es müssen an den Enden solcher Faltenbälge zusätzliche Bauteile angeordnet und mit den Faltenbälgen fest und dicht verbunden werden.

Da Wellrohre oder Wellschläuche ebenfalls ein Wellenprofil in ihrer Wandung haben, ist es naheliegend, diese auf ihre Eignung hin zu untersuchen. Dabei stellen sich jedoch einige Probleme heraus. So ist bei einem Wellrohr im Grundwerkstoff ein weitgehend spannungsfreier Zustand vorhanden, der durch eine vorherige Wärmebehandlung erreicht wurde. Bei einem Wellschlauch hingegen ist durch die vorherige Profilierung stets eine verbleibende Spannung vorhanden, wodurch dieser zwar eine begrenzte Deformation ermöglicht, andererseits die vorhandenen Spannungen im Grundwerkstoff jedoch jeder weiteren Verformung einen zusätzlichen Widerstand entgegen setzen.

Ein gattungsgemäßer Kompensator ist beispielsweise in DE 202 09 222 U1 beschrieben. Dieser besteht aus einem Wellrohrabschnitt, der an beiden Enden durch Streckung zylinderförmig umgeformt ist und im gestreckten Abschnitt Befestigungselemente aufnimmt.

Dabei wird eine Überwurfschraube mit einem endständigen Bördel, durch den zugleich eine Dichtfläche am Kompensator ausgebildet wird, axial gesichert. Diese Seite dient der Verbindung mit einem Anschluss eines Solarkollektors. Die gegenüberliegende Seite ist mit einer Überwurfmutter versehen und soll dem Anschluss an weiterführende Leitungen dienen.

Diese Art des Kompensators hat wesentliche Nachteile. So ist für den Längen- und axialen Ausgleich nur der Bereich des Wellrohres zwischen den Anschlusselementen nutzbar, da die Enden des Kompensators kein Wellenprofil mehr haben und mithin steif sind. Weiterhin müssen die Enden des Kompensators durch Streckung, gegebenenfalls Glättung und anschließendes Anbringen des der Abdichtung dienenden Bördels mehrfach umgeformt werden, wodurch die Herstellungskosten erheblich steigen.

Zudem sind wegen der gestreckten Enden eine größere Baulänge und ein größerer Einbauraum erforderlich.

Ein weiterer Nachteil besteht darin, dass die starren Rohrabschnitte im Bereich der beiden gestreckten Enden des Kompensators keine Winkelabweichungen zulassen und kein seitlicher Versatz zwischen den Anschlussbereichen möglich ist.

Nachteilig ist deshalb auch ein seitlicher Versatz der zu verbindenden Rohrenden, da in jedem Fall nur der ein Wellprofil aufweisende Bereich des Kompensators für einen solchen Ausgleich einsetzbar ist.

Für die Verbindung von Wellrohren mit anderen Bauteilen sind mittlerweile verschiedene Verbindungslösungen bekannt.

So ist aus bereits aus DE 41 05 662 A1 und DE 93 20 431 U1 bekannt, dass der endständige Wellenberg durch eine Axialkraft gestaucht werden kann und dabei zugleich seinen Außendurchmesser vergrößert. Der dabei entstehende Flansch kann beispielsweise Überwurfmuttern führen und mit einem gegenüber liegenden Bauteil eine dichte Verbindung herstellen.

Eine weitere Ausführungsform der oben beschriebenen Verbindung entsteht dann, wenn zunächst das Rippenprofil eines Wellrohres oder Wellschlauches im Bereich des Rohrendes gestreckt und somit zu einem zylindrischen Rohr umgeformt wird, während in einem nachfolgenden Arbeitsschritt am Rohrende wiederum ein flanschähnliches Gebilde angeformt wird. Diese in EP 0 557 594 B1 beschriebene Lösung ermöglicht zwar die Verwendung genormter Überwurfmuttern, verursacht aber bei der Vorbereitung der Erfindung erhebliche Mehraufwendungen.

Durch die im erst genannten Fall vorhandene Bohrung des Befestigungselements bzw. durch die im zweiten Fall vorhandenen zusätzlichen zylindrischen Leitungsabschnitte entstehen innerhalb des Wellrohrkompensators versteifte Abschnitte, die am Längenausgleich, am Ausgleich von Versatz zwischen Leitungsenden und bei Winkelversatz keine Funktion haben.

Es ist ebenso bekannt, Anschlussverbindungen bei Wellrohren oder Wellschläuchen herzustellen, bei denen erst während des Herstellens der Verbindung eine Deformation des endständigen Wellenberges erfolgt. Vorschläge zur Ausführung solcher Verbindungen sind beispielsweise in DE 201 21 607 U1 und DE 20 2007 010 592 U1 enthalten.

Es ist ebenso möglich, Anschlussverbindungen zu erzeugen, die ohne Deformation eines Wellrohres oder Wellschlauches auskommen. Bei diesen Lösungen wird Dichtheit mit einem in ein Wellental eingelegten elastomeren Ring erzeugt, der in einer zylindrischen Bohrung des gegenüber liegenden Anschlussbauteils geführt ist und in dieser abdichtet. Die notwendige Führung des Wellrohres oder Wellschlauches hingegen erfolgt durch zusätzlich einzulegende Sprengringe, Segmentringe oder dergleichen. Entsprechende Vorschläge für solche Verbindungsformen sind beispielsweise in AT 502 404 B1 und in DE 20 2010 000 135 U1 enthalten.

Eine weitere Möglichkeit zur Befestigung eines Wellrohr- oder Wellschlauchendes in einem Verbindungsbauteil ist durch die Ausführung einer so genannten Drahtverstiftung gegeben. In DE 10 2008 050 073 A1 sind mögliche Ausführungsformen solcher Drahtverstiftungen beschrieben.

Alle oben aufgeführten Verbindungsformen setzen voraus, dass wenigstens die Befestigungselemente mit ihrer Bohrung das Wellrohr- oder Wellschlauchende in einem Längenbereich führen. Für Biegungen, seitlichen Versatz und möglicherweise auch für Stauchung sind nur freie Bereiche des Wellrohres oder Wellschlauches nutzbar. Dies hat den Nachteil, dass solche Kompensatoren entweder eine größere Baulänge haben müssen oder dass die Einsatzmöglichkeiten solcher Kompensatoren deutlich beschränkt sind.

Überhaupt ist das vorgeschlagene Wellrohr mit dem sinuswellenförmigen Rippenprofil für seitliche Auslenkungen aufgrund seiner Eigenstabilität wenig geeignet.

Es ist deshalb Aufgabe der Erfindung, Wellrohrkompensatoren vorzuschlagen, die bei verkürzter Baulänge und minimalen zusätzlichen Umformmaßnahmen am Wellrohr oder Wellschlauch einsetzbar sind, leicht und einfach und kostengünstig hergestellt werden können und die Nachteile der Wellrohrkompensatoren des Standes der Technik nicht haben.

Diese Aufgabe wird gelöst durch einen Wellrohrkompensator mit den Merkmalen des kennzeichnenden Teils eines der Schutzansprüche 1 oder 2 in Verbindung mit den Merkmalen der Oberbegriffe der entsprechenden Schutzansprüche. Nachstehend werden in der Beschreibung verwendete Begriffe mit folgendem Bedeutungsinhalt verwendet:
Wellrohrkompensator — ist eine Baueinheit, bestehend aus einem Rohrabschnitt mit einer wellenförmigen Profilierung der Rohrwand, die wenigstens axial dehn- oder stauchbar ist und an ihren Enden Befestigungselemente hat.
Befestigungsmittel — sind lösbare Verbindungsmittel zur Herstellung einer dichten medienführenden Verbindung zwischen dem Wellrohrkompensator und ankommenden bzw. weiterführenden Leitungen.

Nach der Erfindung wird ein Wellrohrkompensator unter Verwendung eines Well-rohr- oder Wellschlauchabschnitts so ausgeführt, dass dieser nach Möglichkeit in seiner maximalen Länge für Kompensationszwecke einsetzbar ist. Hierzu werden die Befestigungsmittel in ihrer Führungslänge so weit reduziert, dass bei kurzer Baulänge des Wellrohr- oder Wellschlauchabschnittes ein entsprechend großer Anteil zur Kompensation verwendbar ist und zugleich betragsmäßig große axiale Verschiebungen, Winkelveränderungen oder überlagerte Bewegungen kompensiert werden können.

Weiterhin wird ein Wellrohr zunächst axial gestaucht, damit das sinuswellenförmige Profil der Rohrwand eine noch stärkere Profilierung erfährt. Durch die axiale Stauchung, die bis zu einem Betrag von etwa 20 % der ursprünglichen Länge möglich ist, stehen die schräg verlaufenden Abschnitte des Wellenprofils steiler und die Eigenelastizität des Rohres verbessert sich. Werden für den Wellrohrkompensator Wellschläuche verwendet, ist entsprechende Flexibilität von vornherein gegeben.

Die Befestigungsmittel, mit denen die Enden des Wellrohrkompensators an ankommende oder weiterführende Leitungsenden angeschlossen werden, sind auf dem Wellrohr- oder Wellschlauchabschnitt axial geführt. Die Bohrung in den Befestigungsmitteln ist dabei auf die kürzeste mögliche Führungslänge verkürzt, während die verbleibende Länge mit einer sich erweiternden Bohrung versehen ist. Die erweiternde Bohrung kann dabei konisch oder sich nicht linear erweiternd ausgeführt sein. Eine bevorzugte Ausführungsform kann dabei ein trompetenförmiger Trichter sein, an dessen radialem Verlauf sich der Wellrohr- oder Wellschlauchabschnitt ohne zusätzlich verformt zu werden, anlegen kann.

Die axiale Sicherung der Befestigungsmittel kann auf verschiedene Weise erfolgen. So kann nach dem Aufschieben der Befestigungsmittel der endständige Wellenberg oder auch mehrere endständige Wellenberge soweit gestaucht werden, dass er bei gleichzeitiger Durchmesservergrößerung zu einem Flansch deformiert wird. Neben der axialen Sicherung kann der Flansch zugleich die Dichtfläche für den Wellrohrkompensator bilden.

Eine weitere Ausführungsform sieht vor, das auf die flanschförmig zu deformierenden Wellenberge folgende Wellental weitgehend in seinem ursprünglichen Profil zu erhalten. In dieses umlaufende Wellental wird dann ein einseitig offener Ring eingelegt, der entweder aufgrund elastischer Verformung oder durch im Umfang vorgesehene Deformationszonen nach dem Aufschieben in eine Lage und Form gebracht wird, dass er sich zwischen den angeformten Flansch und die Frontfläche der Befestigungsmittel legt.

Eine weitere Ausführungsform sieht vor, den Wellrohr- oder Wellschlauchabschnitt an den Enden vor seiner Verwendung als Wellrohrkompensator überhaupt nicht zu verformen. Vielmehr wird zusätzlich zu den Befestigungselementen und nach diesen ein Druckring aufgeschoben, der in einer dem Kompensatorende gegenüber liegenden konischen Bohrung bei der Herstellung einer dichten Verbindung verformt wird und dabei wenigstens den endständigen Wellenberg weitgehend zu einem Flansch verformt.

Eine weitere Ausführungsform, bei der ebenfalls eine Verformung des Wellrohr- oder Wellschlauchendes vermieden wird, kann darin bestehen, dass die Befestigungsmittel im Bereich der Bohrung eine umlaufende Ausnehmung erhalten, in die dann ein Rundmaterial eingeschoben wird, das wiederum partiell in die umlaufende Ausnehmung des Befestigungsmittels und partiell in ein Wellental des Wellrohrkompensators eingreift und auf diese Weise die axiale Sicherung gewährleistet.

Zugleich kann ein vor dem Befestigungsmittel liegendes Wellental ein Dichtelement, beispielsweise einen Rundring, aufnehmen.

Die Befestigungsmittel sind je nach Erfordernis Überwurfmuttern oder Uberwurfschrauben. Es ist ebenso möglich, Flansche als Überwurf zu verwenden. Welches Befestigungsmittel Verwendung findet, ist letztlich nach der Art der Anschlussgestaltung ankommender bzw. fortführender Leitungen festzulegen.

Die Befestigungsmittel sind mit ihrer Bohrung auf dem Wellrohr- oder Wellschlauchabschnitt axial geführt. Erfindungsgemäß ist der zylindrische Teil dieser Bohrung so weit verkürzt, wie dies technisch vertretbar ist. Der übrige Teil der Bohrung ist gegenüber dem zylindrischen Teil erweitert. Die Erweiterungen können dabei durch eine gestufte Bohrung, durch eine konische Erweiterung oder auch durch eine nicht stetig sich erweiternde Bohrung, vorzugsweise durch einen trompetenförmigen Trichter, erfolgt sein. lnsbesondere die letztgenannte Ausführungsform der Bohrung in den Befestigungsmitteln stellt sicher, dass auch bei seitlichen Auslenkungen oder Biegungen des Wellrohrkompensators keine Kantenpressungen entstehen können.

Die Erfindung wird nachstehend anhand einiger Ausführungsbeispiele und Zeichnungen näher erläutert. Es zeigen:

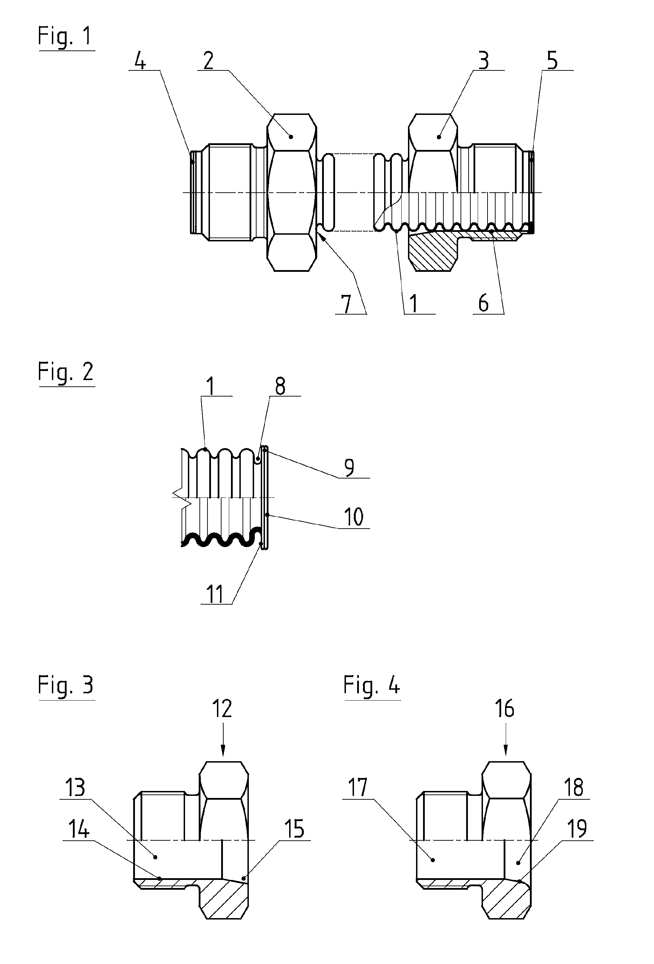

- Fig. 1 —: eine Ausführungsform des erfindungsgemäßen Wellrohrkompensators mit einem Wellrohr- oder Wellschlauchabschnitt und zwei auf diesem axial geführten Überwurfschrauben.
- Fig. 2 —: die in Fig. 1 verwendete Gestaltung des Dicht- und Führungsflansches am Wellrohr- oder Wellschlauchabschnitt.

- Fig. 3 —: eine Ausführungsform einer Überwurfschraube.
- Fig. 4 —: eine weitere Form einer Überwurfschraube.

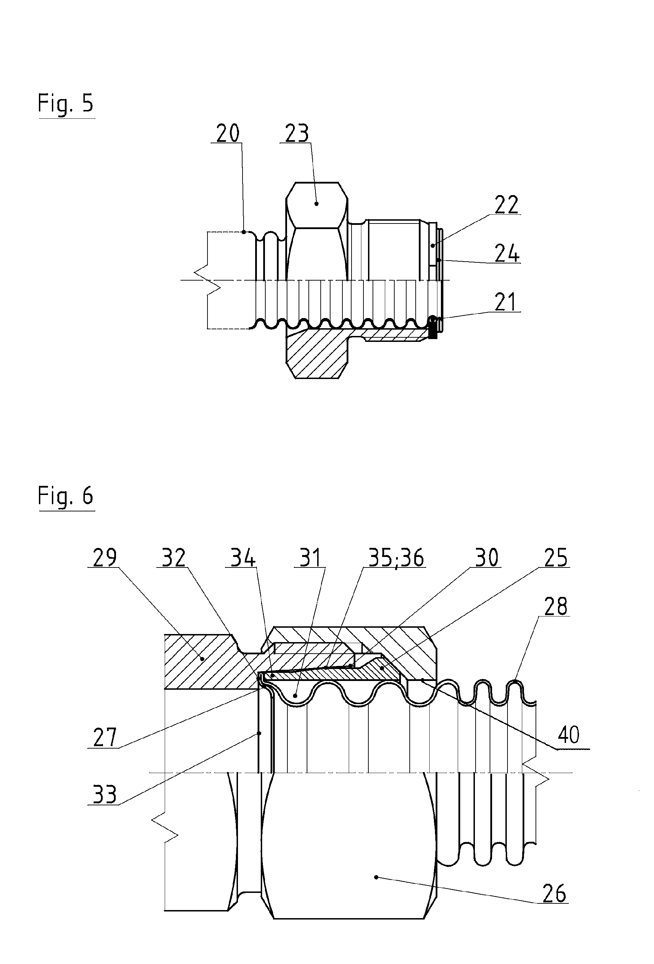

- Fig. 5 —: einen Wellrohrkompensator mit einer Stützringverbindung.
- Fig. 6 —: einen Wellrohrkompensator mit einer Stauchringverbindung.

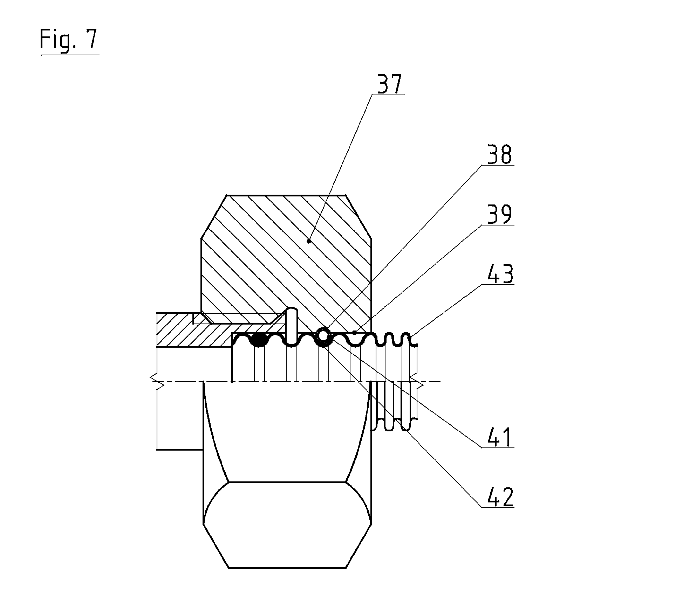

- Fig. 7 —: einen Wellrohrkompensator mit einer Verbindung durch Drahtverstiftung.

Ein Wellrohrkompensator besteht aus einem Wellrohr- oder Wellschlauchabschnitt 1 endlicher Länge. Auf diesem sind Überwurfschrauben 2 und 3 angeordnet, die durch endständige Flansche 4 und 5 axial gesichert sind. Diese Anordnung kann als vorkonfektionierte Baueinheit eingesetzt werden.

Wird ein Wellrohr für den Wellrohr- oder Wellschlauchabschnitt 1 verwendet, wird es zunächst in axialer Richtung gestaucht, wodurch die Flanken der Wellenberge steiler stehen und Wellenberge und -täler stärker ausgerundet werden. Durch die Stauchung erhöht sich die Elastizität des Wellrohres und der Wellrohr- oder Wellschlauchabschnitt 1 kann die Kompensationsaufgaben besser erfüllen.

Die Überwurfschrauben 2 und 3 sind mit ihren Bohrungen 6 und 7 jeweils auf dem Wellrohr- oder Wellschlauchabschnitt 1 geführt und werden durch die Flansche 4 und 5 gegen Herabfallen gesichert.

Ein endständiges Wellental 8 bleibt bei der Stauchung des Wellrohres erhalten. Sofern der Wellrohrkompensator aus Wellschlauch erzeugt wird, kann in einem vorgelagerten Arbeitsgang das endständige Wellental 8 auch durch Verformung erzeugt werden.

Wenigstens ein endständiger Wellenberg 9 wird durch Stauchung so weit deformiert, dass er unter gleichzeitiger Vergrößerung seines Außendurchmessers an der Stirnseite 10 eine plane Dichtfläche ausbildet und an seiner Rückseite 11 eine Fläche zur Abstützung der Überwurfschrauben 2 und 3 bietet.

Eine erfindungsgemäße Überwurfschraube 12 besitzt eine Bohrung 13 mit einem zylindrisch ausgeführten Führungsbereich 14 und einem konischen Erweiterungsbereich 15. Mit dem Führungsbereich 14 wird sie auf einem Wellrohr- oder Wellschlauchabschnitt axial geführt und kann sich an der Rückseite eines Dichtflansches oder an der Rückseite anderer zur axialen Sicherung eingesetzter Bauteile abstützen.

Eine weitere Ausführungsform einer Überwurfschraube 16 hat eine Bohrung 17 mit einem trompetenförmig ausgestalteten Erweiterungsbereich 18. Dadurch besteht die Möglichkeit, dass sich ein Wellrohr- oder Wellschlauchabschnitt direkt an die Bohrungswand 19 anlegen und radiale Biegungen ohne Störungen des Verlaufes einnehmen kann.

Eine weitere Ausführungsform des erfindungsgemäßen Wellrohrkompensators sieht eine Anschlussgestaltung vor, bei der ein Wellrohr- oder Wellschlauchabschnitt 20 lediglich auf eine bestimmte erforderliche Länge abgelängt worden ist und anschließend auf diesen in ein endständiges Wellental 21 ein einseitig offener Ring 22 eingelegt werden kann. Dieser hat vorzugsweise einen rechteckförmigen Querschnitt, kann aber auch entsprechend dem Profil eines Wellentales angepasst sein. Bei dem einseitig offenen Ring 22 handelt es sich entweder um einen Ring aus einem Federwerkstoff oder um einen Ring mit wenigstens einem Deformationsbereich, wobei dieser dann zunächst aufgeweitet, in das Wellental 21 eingelegt und durch Zusammendrücken wiederum deformiert wird.

Gegen den Ring 22 stützt sich ein Befestigungsmittel 23 ab, wobei sowohl Uberwurfschrauben als auch Überwurfmuttern einsetzbar sind.

Bei der Herstellung dieser Anschlussform wird ein endständiger Flansch 24 am Wellrohr- oder Wellschlauchabschnitt 20 erst durch den Anzug der Befestigungsmittel 23 im Zusammenwirken mit einer Dichtfläche im gegenüber liegenden Anschlussstück erreicht. Eine Vorfertigung ist ebenso möglich.

Eine weitere Ausführungsform des erfindungsgemäßen Wellrohrkompensators sieht vor, einen sogenannten Stauchring 25 zusätzlich zu den Befestigungsmitteln 26 auf das Ende 27 eines Wellrohr- oder Wellschlauchabschnittes 28 aufzuschieben.

Der Stauchring 25 wird bei der Herstellung der Anschlussverbindung mit einem gegenüberliegenden Anschlussgegenstück 29 in einer konischen Aufnahmebohrung 30 deformiert und greift dadurch in ein endständiges Wellental 31 des Well-rohrendes 27 ein. Beim weiteren Anziehen der Befestigungsmittel 26 wird dann wenigstens ein endständiger Wellenberg 32 axial soweit deformiert, dass er gegen eine Dichtfläche 33 gepresst wird und gegenüber dieser abdichtet. Weitere Dichtflächen entstehen durch den axialen Druck des Stauchringes 25 gegen die Stirnseite 34 des deformierten Wellenberges 32 sowie an der Mantelfläche 35 des Stauchringes gegenüber der Oberfläche 36 der konischen Bohrung 30.

Eine weitere Ausführungsform des Wellrohrkompensators sieht Leitungsanschlüsse vor, bei denen die Befestigungsmittel 37 durch eine Drahtverstiftung auf dem Wellrohr- oder Wellschlauchabschnitt axial fixiert werden.

Befestigungsmittel 37 in der Form einer Überwurfschraube oder Überwurfmutter sind hierzu jeweils mit einer Nut 38 im Bereich ihrer Bohrung 39 versehen, die über eine nicht dargestellte tangentiale Einführungsbohrung mit einem Draht 41 ausgefüllt wird. Anstelle des Drahtes kann auch eine Kapillare verwendet werden. Nach dem Einschieben des Drahtes 41 liegt dieser mit einem Teil seines Querschnittes in der ringförmigen Nut 38 und mit einem weiteren Teil seines Querschnittes in einem endständigen Wellental 42 des Wellrohr- oder Wellschlauchabschnittes 43.

Das überstehende Ende des Wellrohr- oder Wellschlauchabschnittes ragt in eine Anschlussbohrung, wobei in einem endständigen Wellental ein Dichtelement liegt und gegenüber einer zylindrischen Aufnahmebohrung die Abdichtung der Verbindung erzeugt.

Die Erfindung hat also den Vorteil, dass sie die Herstellung einfach aufgebauter Wellrohrkompensatoren ermöglicht, die vorkonfektioniert oder vor Ort herstellbar sind, mit verschiedenartig ausgebildeten Befestigungsmitteln und mit auf verschiedenartige Weise ausgestalteten Dichtsystemen auf nahezu beliebige Weise mit Leitungssystemen verbunden werden können.

### Bezugszeichenliste

- 1: Wellrohr- oder Wellschlauchabschnitt
- 2: Überwurfschraube
- 3: Überwurfschraube
- 4: Flansch
- 5: Flansch
- 6: Bohrung
- 7: Bohrung
- 8: Wellental
- 9: Wellenberg
- 10: Stirnseite
- 11: Rückseite
- 12: Überwurfschraube
- 13: Bohrung
- 14: Führungsbereich
- 15: Erweiterungsbereich
- 16: Überwurfschraube
- 17: Bohrung
- 18: Erweiterungsbereich
- 19: Bohrungswand
- 20: Wellrohr- oder Wellschlauchabschnitt
- 21: Wellental
- 22: Ring
- 23: Befestigungsmittel
- 24: Flansch
- 25: Stauchring
- 26: Befestigungsmittel
- 27: Wellrohrende
- 28: Wellrohr- oder Wellschlauchabschnitt
- 29: Anschlussgegenstück
- 30: Aufnahmebohrung
- 31: Wellental
- 32: Wellenberg
- 33: Dichtfläche
- 34: Stirnseite
- 35: Mantelfläche
- 36: Oberfläche der Bohrung [30]
- 37: Befestigungsmittel
- 38: Nut
- 39: Bohrung
- 40: Bohrung
- 41: Draht
- 42: Wellental
- 43: Wellrohr- oder Wellschlauchabschnitt

## Claims

1. Wellrohrkompensator, bestehend aus
einem Wellrohr- oder Wellschlauchabschnitt (1); (20); (43) und Befestigungsmitteln, die an den Wellrohr- oder Wellschlauchenden angeordnet sind,
wobei die an den Wellrohr- oder Wellschlauchenden angeformten Dichtflächen,
als Flansch (4); (5); (24) ausgebildet
und diese durch axiale Stauchung wenigstens eines endständigen Wellenberges (9) ausgeformt sind,
die Befestigungsmittel in axialer Richtung
durch die Flansche (4); (5); (24)
oder
durch einen in ein endständiges Wellental (21) eingelegten Ring (22) oder
durch eine Drahtverstiftung, bei der der Draht (41) jeweils partiell in eine Ausnehmung des Befestigungsmittels (37) und ein Wellental (42) des Wellrohr- oder Wellschlauchabschnitts (43) eingreift,
gesichert sind
**dadurch gekennzeichnet, dass**
die Befestigungsmittel
Überwurfmuttern oder Überwurfschrauben sind
und deren Bohrungen (6); (13); (17) wenigstens in einem von einer Verbindungsstelle abgewandten Bereich sich erweiternd ausgeführt ist.

2. Wellrohrkompensator, bestehend aus
einem Wellrohr- oder Wellschlauchabschnitt (28)
und Befestigungsmitteln (26), die an den Wellrohr- oder Wellschlauchenden angeordnet sind,
wobei die an den Wellrohr- oder Wellschlauchenden angeformten Dichtflächen
durch einen auf die Wellrohr- oder Wellschlauchenden aufgeschobenen Stauchring (25) der Gestalt erzeugt sind, dass bei der Herstellung einer dichten Verbindung mit einem Anschlussgegenstück (29) der aufgeschobene Stauchring (25) in einer im Anschlussgegenstück (29) vorhandenen konischen Aufnahmebohrung (30) deformiert wird und dabei mit seinem Vorderteil in ein endständiges Wellental (31) eingreift, beim weiteren Anzug des Befestigungsmittels (26) wenigstens den endständigen Wellenberg (32) deformiert, einen Flansch ausbildet, und mit seiner Stirnseite (34) gegenüber diesem und mit seiner Mantelfläche (35) gegenüber der Aufnahmebohrung (30) des Anschlussgegenstückes (29) abdichtet,
**dadurch gekennzeichnet, dass**
die Befestigungsmittel
Überwurfmuttern oder Überwurfschrauben sind
und deren Bohrungen (13); (17); (40) wenigstens in einem von einer Verbindungsstelle abgewandten Bereich sich erweiternd ausgeführt ist.

3. Wellrohrkompensator nach einem der Ansprüche 1 oder 2,
**dadurch gekennzeichnet, dass**
der Wellrohr- oder Wellschlauchabschnitt (1); (20); (28); (43) wenigstens in seinem mittleren Bereich axial gestaucht ist.

4. Wellrohrkompensator nach einem der Ansprüche 1 bis 3,
**dadurch gekennzeichnet, dass**
die Bohrung (6); (7); (13); (17); (39); (40) im der Verbindungsstelle abgewandten Bereich trichter- oder trompetenförmig ausgeführt ist.
